Europäisches Patentamt

European Patent Office

Office européen des brevets

(19)

(11) Veröffentlichungsnummer: **0 268 052**
**A1**

(12) **EUROPÄISCHE PATENTANMELDUNG**

(21) Anmeldenummer: **87114483.8**

(22) Anmeldetag: **05.10.87**

(51) Int. Cl.4 **G06F 13/24** , G06F 9/46

(30) Priorität: **22.10.86 CH 4211/86**

(43) Veröffentlichungstag der Anmeldung:
**25.05.88 Patentblatt 88/21**

(84) Benannte Vertragsstaaten:
**CH DE FR GB LI**

(71) Anmelder: **BBC Brown Boveri**
**Aktiengesellschaft**

**CH-5401 Baden(CH)**

(72) Erfinder: **Kirrmann, Hubert**
**Im Rüteli 17**
**CH-5405 Baden-Dättwil(CH)**

(54) Verfahren zur Taskumschaltung nach einer Unterbrechnungsanforderung in einem Prozessorsystem.

(57) Beim vorliegenden Verfahren werden zwei Prozessoren (P1, P2) verwendet, von denen nur einer normalerweise eine Task bearbeitet. Der andere steht währenddessen lediglich in Bereitschaft. Wenn eine, eine neue Task anfordernde Unterbrrechungsanforderung vorliegt, dann wird sie von dem in Bereitschaft stehenden Prozessor beantwortet. Dieser entscheidet, ob eine Taskumschaltung nötig ist. Falls dies der Fall ist, unterbricht der Bereitschafts-Prozessor den die ursprüngliche Task bearbeitenden Prozessor und beginnt sofort mit der Ausführung der neuen Task. Während dieser Zeit rettet der Prozessor, der die ursprüngliche Task bearbeitet hat, deren Kontext in einen für beide Prozessoren zugreifbaren Speicher (M).

FIG. 1

EP 0 268 052 A1

## Verfahren zur Taskumschaltung nach einer Unterbrechungsanforderung in einem Prozessorsystem

### Technisches Gebiet

Die vorliegende Erfindung betrifft ein Verfahren zur Taskumschaltung nach einer Unterbrechungsanforderung in einem Prozessorsystem.

### Stand der Technik

Prozessorsysteme bei denen unter der Kontrolle eines Multitask-Betriebssystems auf eine Unterbrechungsanforderung hin die Ausführung eines grade bearbeiteten Tasks unterbrochen und statt dessen ein neuer Task bevorzugt bearbeitet wird, sind allgemein bekannt. Sie finden vornehmlich zur Steuerung und Regelung von Prozessen Verwendung.

In den bekannten Prozessorsystemen ist jede Taskumschaltung mit einem Zeitverlust verbunden, da der Kontext der verdrängten Task vor Bearbeitung der neuen Task zunächst gerettet werden muss, um die Ausführung der verdrängten Task nach Beendigung der Ausführung der neuen Task fortsetzen zu können. Zum Kontext einer Task gehören beispiels weise die Registerinhalte des die Task ausführenden Prozessors. Je nach Prozessor - bzw. Betriebssystem kann zum Kontext einer Task jedoch noch eine beträchtliche Menge weiterer Information, insbesondere im Hinblick auf Speicherverwaltung oder dergleichen gehören. Bei heute üblichen Echtzeit-Kerneln beträgt die für eine Taskumschaltung erforderliche Zeit zwischen 50 us und 400 us.

### Darstellung der Erfindung

Es ist Aufgabe der vorliegenden Erfindung, ein Verfahren der eingangs genannten Art anzugeben, durch das eine schnellere Taskumschaltung erreicht wird und das mit einfachen Mitteln realisierbar ist.

Die genannte Aufgabe wird gemäss der vorliegenden Erfindung gelöst durch die Angabe eines neuen Verfahrens zur Taskumschaltung, wie es in den Patentansprüchen gekennzeichnet ist.

Durch das erfindungsgemässe Verfahren wird die Antwortszeit auf Unterbrechungsanforderungen im Durchschnitt kleiner. Das erfindungsgemässe Verfahren ist besonders zur Taskumschaltung bei - schnellen Reglern geeignet. Zur Durchführung des erfindungsgemässen Verfahrens ist kein voll ausgebautes Multiprozessorsystem erforderlich. Ausserdem können herkömmliche Betriebssysteme verwendet werden.

### Kurze Beschreibung der Zeichnungen

Weitere Merkmale und Vorteile der vorliegenden Erfindung ergeben sich aus der nachfolgenden ausführlichen Beschreibung insbesondere unter Berücksichtigung der beigefügten Zeichnungen. Es zeigen:

Fig. 1 eine schematische Darstellung eines Prozessorsystem zur Ausführung des Verfahrens nach der Erfindung,

Fig. 2 In zwei Diagrammen a) and b) den zeitlichen Verlauf der Taskumschaltung nach dem erfindungsgemässen Verfahren und

Fig. 3 eine schematische Darstellung eines weiteren Prozessorsystems zur Ausführung des Verfahrens nach der Erfindung.

### Wege zur Ausführung der Erfindung

Es wird nunmehr auf die Zeichnungen Bezug genommen, in denen übereinstimmende Elemente mit übereinstimmenden Bezugszeichen versehen sind.

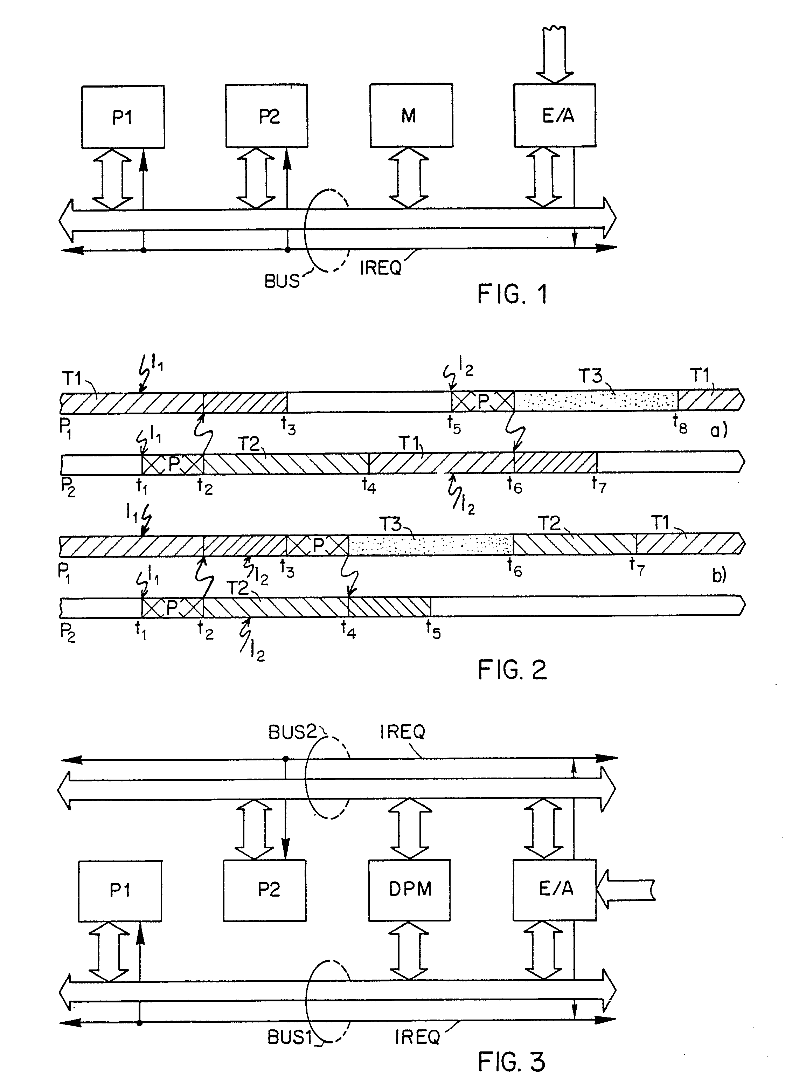

In Fig. 1 ist in schematischer Darstellung ein Prozessorsystem zur Ausführung des Verfahrens nach der Erfindung dargestellt, wobei nur die für das Verständnis der Erfindung unbedingt erforderlichen Komponenten in Fig. 1 enthalten sind.

Mit P1 und P2 sind zwei vorzugsweise identische Prozessoren bezeichnet, die gemeinsam mit einem Speicher M und einem Ein/Ausgabegerät E/A an einen Systembus BUS angeschlossen sind. Der Systembus BUS enthält unter anderem eine Leitung IREQ über welche Unterbrechungsanforderungen vom Ein/Ausgabegerät E/A zu den Prozessoren P1 und P2 übertragen werden können. Neben der Leitung IREQ enthält der Systembus BUS die üblichen Adress-und Datenleitungen sowie weitere Kontrolleitungen, die sämtlich durch die breitere Linie im Systembus BUS dargestellt sein sollen.

Mit Bezug nunmehr auch auf Fig. 2 soll jetzt das erfindungsgemässe Verfahren erläutert werden. Dort ist unter a) und b) in jeweils zwei zueinander parallelen, als Balkenlinien dargestellten Zeitachsen, die Tätigkeit der Prozessoren P1 und P2 schematisch dargestellt.

In Fig. 2 a) soll Prozessor P1 zunächst mit der Ausführung einer Task T1 beschäftigt sein, während Prozessor P2 lediglich in Bereitschaft steht. Zum Zeitpunkt $t_1$ wird eine erste Unterbrechungsanforderung $I_1$ für eine Task T2 vom Ein/Ausgabe-Gerät E/A an die Prozessoren P1, P2 übertragen. Diese wird vom Prozessor P1 ignoriert, der einfach die Task T1 weiter ausführt. In dem für diesen Zweck eigens in Bereitschaft stehenden Prozessor P2 führt die Unterbrechungsanforderung $I_1$ dagegen zur Ausführung einer Prioritätsroutine P. Durch diese wird entschieden, ob es auf die Unterbrechungsanforderung hin überhaupt zu einer Unterbrechung kommen soll. Falls dies der Fall ist, ist das Ergebnis dieser Prioritätsroutine die Unterbrechung der Ausführung der Task T1 im Prozessor P1 durch den Prozessor P2 zum Zeitpunkt $t_2$. Um die Ausführung der Task T1 zu einem späteren Zeitpunkt wieder aufnehmen zu können, rettet Prozessor P1 noch deren Kontext in den beiden Prozessoren P1, P2 gemeinsamen Speicher M. Er benötigt dazu die Zeit bis zum Zeitpunkt $t_3$. Der Vorgang der Kontextrettung ist hier, wie auch an noch anderen Stellen in Fig. 2, durch eine engere Schraffur besonders gekennzeichnet. Nach der Kontextrettung steht der Prozessor P1 zur Bearbeitung der nächstfolgenden Unterbrechungsanfordeurng in Bereitschaft.

Unmittelbar nach der Unterbrechung der Ausführung der Task T1 im Prozessor P1, also praktisch bereits zum Zeitpunkt $t_2$, hat Prozessor P2 die Ausführung der durch die Unterbrechungsanforderung $I_1$ von Zeitpunkt $t_1$ angeforderten Task T2 aufgenommen. Sie wird zum Zeitpunkt $t_4$ beendet. Anschliessend nimmt Prozessor P2 die Ausführung der Task T1 unter Zugriff auf den im Speicher M zuvor von Prozessor P1 abgelegten Kontext dieser Task wieder auf, während Prozessor P1 in Bereitschaft für die Bearbeitung der nächstfolgenden Unterbrechungsanforderung verbleibt. Zu diesem Zeitpunkt hat sich erkennbar die Rolle der Prozessoren P1, P2 vertauscht.

Es soll nun zum Zeitpunkt $t_5$ eine zweite Unterbrechungsanforderung $I_2$ für eine Task T3 vom Ein/Ausgabe-Gerät E/A an die Prozessoren P1, P2 vorliegen. Diese wird nun vom Prozessor P2 ignoriert, während Prozessor P1 eine Prioritätsroutine P ausführt, die hier zum Zeitpunkt $t_6$ zur erneuten Unterbrechung der Ausführung der Task T1 führt, diesmal im Prozessor P2. Dieser rettet sofort nach der Unterbrechung den neuen Kontext der Task T1 in den Speicher M, womit er zum Zeitpunkt $t_7$ fertig ist. Anschliessend steht Prozessor P2, wie ganz zu Anfang, wieder in Bereitschaft. Direkt im Anschluss an die Unterbrechung der Ausführung der Task T1 im Prozessor P2 hat Prozessor P1, praktisch zum Zeitpunkt $t_6$, die Ausführung der angeforderten neuen Task T3 aufgenommen, die er zum Zeitpunkt $t_8$ abschliesst.

Danach setzt er die Ausführung der Task T1 unter Verwendung des von Prozessor P2 zwischen den Zeitpunkten $t_6$ und $t_7$ geretteten aktuellen Kontextes dieser Task fort.

Wie anhand von Fig. 2 a) deutlich zu erkennen ist, wurden die durch die Unterbrechungsanforderungen $I_1$ und $I_2$ angeforderten neuen Tasks T2 und T3 nach Abschluss der Prioritätsroutinen P von dem jeweils grade in Bereitschaft stehenden Prozessor sofort bearbeitet, ohne dass die Kontextrettung der jeweils alten Task, hier der Task T1, abgewartet werden musste. Zudem konnte die alte Task T1 während des Ablaufs der Prioritätsroutinen P noch weiter bearbeitet werden.

Die neuen Tasks bzw. die Unterbrechungsanforderungen überhaupt werden, gemäss einer besonderen Ausbildung des erfindungsgemässen Verfahrens, jedoch nicht immer sofort bearbeitet. Fig. 2 b) zeigt einen solchen Ausnahmefall. Dieser besteht darin, dass eine zweite Unterbrechungsanforderung, die auch hier wieder mit $I_2$ bezeichnet ist, zwischen den Zeitpunkten $t_2$ und $t_3$ bereits vorliegt, solange Prozessor P1 noch mit dem Retten des Kontextes der ersten Task T1 beschäftigt ist. In diesem Fall wird die Bearbeitung der Unterbrechungsanforderung $I_2$ bis zum Abschluss der Kontextrettung zum Zeitpunkt $t_3$ zurückgestellt. Trotz dieser Ausnahme wird durch das erfindungsgemässe Verfahren im Durchschnitt eine kürzere Antwortzeit auf Unterbrechungsanforderungen erreicht.

Eine weitere Besonderheit von Fig. 2 b) gegenüber Fig. 2 a) besteht darin, dass die zweite Unterbrechungsanforderung $I_2$ bereits zu einem Zeitpunkt vorliegt und schliesslich auch bearbeitet wird, zu dem die Bearbeitung der Task T2, deren Ausführung wie in Fig. 2 a) durch die erste Unterbrechungsanforderung $I_1$ angefordert wurde, noch nicht beendet ist und dass sich die durch die zweite Unterbrechungsanforderung $I_2$ angeforderte Task T3 über die Prioritätsroutine P zwischen den Zeitpunkten $t_3$ und $t_4$ auch gegenüber der Task T2 durchsetzt. Insofern muss im Beispiel von Fig. 2 b) nach Beendigung der Ausführung der Task T3 durch den Prozessor P1 zunächst die Ausführung der Task T2 wieder aufgenommen (Zeitpunkt $t_6$) und beendet werden (Zeitpunkt $t_7$). Erst danach kann die Ausführung der Task T1 fortgesetzt werden.

Bis auf die erläuterten Unterschiede entsprechen sich Teil a) und Teil b) von Fig. 2.

Im Prozessorsystem nach Fig. 1 müssen beide Prozessoren P1, P2 den gleichen Systembus BUS benutzen. Zu Zeiten, in denen die beiden Prozessoren P1 und P2 parallel aktiv sind, wie beispielsweise zwischen den Zeitpunkten $t_1$ und $t_2$ von Fig. 2, resultiert daraus eine gewisse Verlangsamung der Operation. Durch ein Prozessorsystem, wie es in Fig. 3 dargestellt ist, lässt sich diese Verlangsamung verringern. Als gemeinsamer Speicher für beide Prozessoren P1 und P2 ist hier ein sogenannter Dual-Port-Speicher DPM verwendet, der mit den Prozessoren P1 und P2 über zwei getrennte Systembusse BUS1 und BUS2 verbunden ist.

## Ansprüche

1. Verfahren zur Taskumschaltung nach einer Unterbrechungsanforderung in einem Prozessorsystem, gekennzeichnet durch folgende Merkmale:
-es werden zwei Prozessoren (P1, P2) verwendet;
-ein Task (T1, T2, T3) wird jeweils nur von einem der Prozessoren ausgeführt;
-der jeweils andere Prozessor steht zur Bearbeitung der nächsten Unterbrechungsanforderung in Bereitschaft;
-kommt eine Unterbrechungsanforderung, so entscheidet der zu ihrer Bearbeitung in Bereitschaft stehende Prozessor, ob es zu einer Taskumschaltung kommen soll;
-ist eine solche erforderlich, so unterbricht der letztgenannte Prozessor den mit der ursprünglichen Task beschäftigten Prozessor und beginnt sofort mit der Ausführung der neuen Task;
-parallel dazu rettet der mit der ursprünglichen Task beschäftigte Prozessor deren Kontext in einen auch für den anderen Prozessor zugreifbaren Speicher (M) und übernimmt anschliessend die Bereitschaft zur Bearbeitung der nächstfolgenden Unterbrechungsanforderung.

2. Verfahren nach Anspruch 1, dadurch gekennzeichnet, dass der die neue Task ausführende Prozessor nach Beendigung der neuen Task die Ausführung der ursprünglichen, durch ihn selbst unterbrochenen Task fortsetzt.

3. Verfahren nach Anspruch 1, dadurch gekennzeichnet, dass für den Fall, dass eine weitere Unterbrechungsanforderung bereits vorliegt, wenn der Prozessor, der die ursprüngliche Task ausgeführt hat, noch mit deren Kontextrettung beschäftigt ist, die Bearbeitung der weiteren Unterbrechungsanforderung bei zum Abschluss der Kontextrettung zurückgestellt wird.

4. Verfahren nach Anspruch 1, dadurch gekennzeichnet, dass als gemeinsamer Speicher für die beiden Prozessoren ein Dual-Port-Speicher verwendet wird.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 082 722 (NORMAN)<br>* Seite 4, Zeile 23 - Seite 5, Zeile 4; Anspruch 13; Figuren *<br>--- | 1 | G 06 F 13/24<br>G 06 F 9/46 |
| A | EP-A-0 125 797 (DENNIS)<br>* Seite 4, Zeilen 27-38; Seite 5, Zeilen 19-24; Figur 1 *<br>--- | 1 | |
| A | IEEE MICRO, Band 5, Nr. 1, Februar 1985, Seiten 53-66, IEEE, New York, US; H. KIRRMANN: "Events and interrupts in tightly coupled multiprocessors "<br>* Seite 54, Spalte 1, Zeilen 5-7; Spalte 2, Zeilen 3-5; Seite 56, Spalte 2, Zeilen 28-30,42-48 *<br>--- | 1,4 | |
| A | ELECTRONICS INTERNATIONAL, Band 52, Nr. 4, Februar 1980, Seiten 166-170, New York, US; T.A. HARR et al.:"Interrupts call the shots in scheme using two microprocessors"<br>* Seite 169, "Table interrupt operations"; Spalte 1, Zeilen 14-32 *<br>----- | 1 | |

RECHERCHIERTE SACHGEBIETE (Int. Cl.4)

G 06 F 13/24
G 06 F 13/26
G 06 F 9/46

Der vorliegende Recherchenbericht wurde für alle Patentansprüche erstellt

| Recherchenort | Abschlußdatum der Recherche | Prüfer |
|---|---|---|
| DEN HAAG | 22-01-1988 | GUINGALE A. |